# EUROPEAN PATENT APPLICATION

(11) **EP 2 403 150 A1**
(43) Date of publication of application: **04.01.2012**
(21) Application number: 10167612.0
(22) Date of filing: 29.06.2010
(51) Int. Cl.: H04B 1/707, G01S 19/24

(54) **Signal processing method, device and system**

(71) Applicant: Fastrax Ltd, 01510 Vantaa (FI)
(72) Inventor: Söderholm, Stefan, 01510, Vantaa (FI)
(74) Representative: Söderman, Lisbeth Karin

(57) **Abstract**

First aspect of the invention is a signal processing method comprising steps of demodulating an incoming signal, performing a Fourier transform to the demodulated incoming signal, generating a code word signal, performing a Fourier transform to the code word signal, calculating complex conjugate for the Fourier transformed code word signal, and correlating said complex conjugate of the Fourier transformed code word signal and the Fourier transformed demodulated incoming signal. The first aspect of the invention is mainly characterized in that said code word signal comprises at least two different code words for correlation of multiple different signals from said incoming signal. The invention also concerns signal processing device and system.

## Description

### TECHNICAL FIELD OF INVENTION

The invention relates to a method, device and system for signal processing.

### BACKGROUND OF THE INVENTION

Signals transmitted from Global Navigation Satellite System (GNSS) satellites consist of a carrier frequency modulated by a pseudo-random noise (PRN) code that is unique to each satellite.

All the satellites transmit at the same carrier frequency, but due to the high velocity of the satellites the signals will experience a Doppler shift in frequency before reaching the GNSS receiver. The Doppler shift can be several kHz in magnitude.

The pseudo-random noise (PRN) code sequence is 1023 units or chips long and repeats itself continuously. The code phase at the receiver at any given time is dependent on the distance between the receiver and the satellite.

There are several ways of acquiring signals from GNSS satellites. All these methods rely on the effect of autocorrelation, wherein a GNSS receiver will generate exact replicas of a carrier frequency and pseudo-random noise code and multiply these replicas with the incoming signal. If the carrier frequency and code phase of the generated signals match the ones in the incoming signal, it will produce maximum correlation power and the resulting mixed signal is easily detectable.

A straightforward way of acquiring the signals is to do a serial search, i.e. testing with all possible frequencies and code phases. In this case the total number of combinations is over 40 000 for each satellite signal (1023 code phases and 40 frequencies).

Another method to search for the signals is by parallelizing the code phase using Fourier transforms of the signals and replicas. With this method only Doppler frequency needs to be found. If a local oscillator is set to correct frequency the output will show correlation results for all the code phases at the same time. With this method the number of required computations reduces to the number of frequencies needed to search. Even this method still needs hundreds of combinations to be searched. For example if the Doppler shift is between -4 kHz and +4 kHz and 500 Hz frequency bin is used, and 32 satellites are searched, it requires 17 x 32 = 544 searches.

### OBJECT OF THE INVENTION

The object of the present invention is to provide a method, device and system for reducing the number of searches and time needed to acquire multiple spread spectrum signals from a received RF signal.

### SUMMARY OF THE INVENTION

The invention discloses a signal processing method, device and system for quick acquisition of multiple spread spectrum signals from e.g. GNSS system.

First aspect of the invention is a signal processing method comprising steps of demodulating an incoming signal, performing a Fourier transform to the demodulated incoming signal, generating a code word signal, performing a Fourier transform to the code word signal, calculating complex conjugate for the Fourier transformed code word signal, and correlating said complex conjugate of the Fourier transformed code word signal and the Fourier transformed demodulated incoming signal. The first aspect of the invention is mainly characterized in that said code word signal comprises at least two different code words for correlation of multiple different signals from said incoming signal.

In an embodiment of the first aspect of the invention, said first signal is a navigation signal or a positioning signal.

In an embodiment of the first aspect of the invention, said code word signal comprises at least two code words. In another embodiment said code word signal comprises at most eight different code words. In another embodiment said code word signal comprises 2 - 8 different code words. In another embodiment said code word signal comprises four different code words. In another embodiment said code word signal comprises more than eight different code words.

In an embodiment of the first aspect of the invention, said at least two code words are pseudo-random sequences of a satellite navigation system.

Second aspect of the invention is a signal processing module, which is mainly characterized in that said module is arranged to perform the method of the first aspect of the invention.

Third aspect of the invention is a signal processing module, which is mainly characterized in that said module comprises means for demodulating an incoming signal, performing a Fourier transform to the demodulated incoming signal, generating a code word signal comprising at least two different code words, performing a Fourier transform to the code word signal, calculating complex conjugate for the Fourier transformed code word signal, and correlating said complex conjugate of the Fourier transformed code word signal and the Fourier transformed demodulated incoming signal.

In an embodiment of the third aspect of the invention, at least one of said means is at least partially implemented by program code on a computer readable media.

Fourth aspect of the invention is a device comprising the signal processing module according to the second and/or third aspect of the invention.

Fifth aspect of the invention is a positioning system comprising the device of the fourth aspect of the invention.

Sixth aspect of the invention is a navigation system comprising the device of the fourth aspect of the invention.

Seventh aspect of the invention is use of the device of the fourth aspect of the invention as a system element in a navigation and/or positioning system.

The invention also includes a system that implements the method disclosed herein.

Some embodiments of the invention are described herein, and further applications and adaptations of the invention will be apparent to those of ordinary skill in the art.

### BRIEF DESCRIPTION OF DRAWINGS

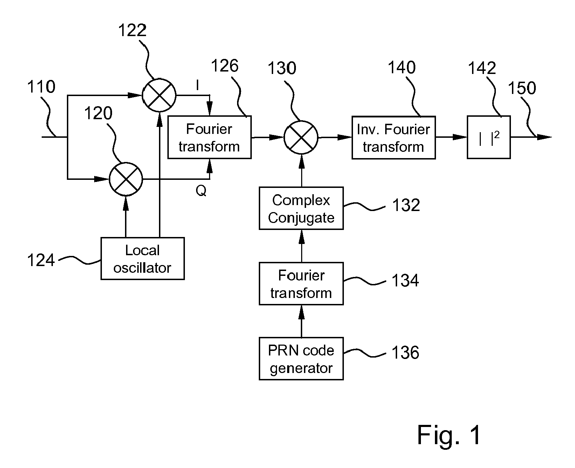

In the following, the invention is described in greater detail with reference to the accompanying drawing in which
Figure 1 shows an exemplary schematic diagram of signal processing in an embodiment of the invention.

### DETAILED DESCRIPTION OF THE DRAWINGS

Figure 1 shows an exemplary schematic diagram of signal processing in an embodiment of the invention. A module of this embodiment implementing the illustrated schematic diagram of the figure 1 may be used in processing GNSS signals. The module may be implemented by hardware, software or a combination of hardware and software elements.

An incoming signal 110 is demodulated into in-phase (I) and quadrature phase (Q) signals using two mixers 120, 122 and local oscillator 124 operating at a certain frequency. These signals are then Fourier transformed 126 and the output is forwarded to a third mixer 130.

A PRN code generator 136 generates a code word signal using code words which are stored in the PRN code generator or memory means which the PRN code generator is configured to access. The code word signal comprises at least to different code words for searching at least two different signals within the incoming signal. The code word signal may comprise all the available code words or any other number of code words. The code word signal is then Fourier transformed 134 and complex conjugate 132 of the Fourier transformed code word signal is fed to the third mixer 130.

The third mixer 130 outputs mixing result of the complex conjugate of the Fourier transformed code word signal and the demodulated and Fourier transformed incoming signal. An inverse Fourier transform 140 is performed to the output signal of the third mixer and the result is normalized 142 to produce an output 150 of the signal processor.

The output 150 shows correlation for all the signals having the same code word as were used in the code word signal if the signals exist in the incoming signal and they are in the chosen frequency band. The frequency band can be modified by changing the output frequency of the local oscillator 124. The local oscillator can be adjusted to search signals having for example -4 kHz to +4 kHz frequency offset, which is usually caused by Doppler shifting. The output shows phase of the code word and frequency shift of the found signals which can then be easily acquired.

The total number of computations required to acquire signal from a number of satellites is significantly lower using the method of the above-mentioned embodiment compared to conventional signal acquisition methods.

Example 1: In the initial state we have 32 satellite signals to search (PRN1...32) and we need to find 4 signals to acquire location. We need to search the Doppler frequency from -4 kHz to +4 kHz in steps of 500 Hz, i.e. a total of 17 frequencies.

Conventional method would be to search PRN1, Freq1; PRN1, Freq2; PRN1, Freq3; ...; PRN32, Freq1; ...; PRN32, Freq17 until the fourth signal is found. Assuming that the fourth signal is found from PRN24 with a Doppler frequency of 0 Hz - the amount of needed searches is 23 x 17 + 9 = 400 searches.

Using the method of the above-mentioned embodiment, the search would be done with several PRN codes at a time. When using 4 PRN codes at a time, the search would be (PRN1 + PRN2 + PRN3 + PRN4), Freq1; (PRN1 + PRN2 + PRN3 + PRN4), Freq2; ...; (PRN21 + PRN22 + PRN23 + PRN24), Freq8; (PRN21 + PRN22 + PRN23 + PRN24), Freq9 where the fourth satellite is found in this example.

Depending on the output of each search, a different amount of searches has to be done. With a conventional method, 4 x 17 = 68 searches are required for every 4 satellites. The new method requires 17 searches for 4 satellites if nothing is found. Four extra searches are required per each found satellite. So the number of searches is 17, 21, 25, 29 and 33 for 0, 1, 2, 3 and 4 found satellites, respectively. Compared to 68 searches of the conventional method, the presented method will reduce needed searches up to 75% and over 50% even in the worst case.

In an embodiment of the invention, the above-mentioned module is arranged in connection of a device. The device may be for example navigation device, positioning device, mobile phone, digital camera, digital camcorder or some other device with a positioning or navigation function. The module can be integrated into the device, or be a separate module in the device, or a physically separate module that is arranged to be connected to the device with wireless or wired connection.

In an embodiment of the invention, the device comprising the signal processing module can be a part of a positioning or navigation system. The device can be for example a GNSS receiver comprising the signal processing module according to an embodiment of the invention. The GNSS receiver receives positioning signals from a satellite navigation system and processes the received signals with said signal processing module. The receiver may be arranged to transmit location data to another device of the navigation and/or positioning system, for example to a display unit or to a system in a vehicle in which the receiver is being used.

To a person skilled in the art, the foregoing exemplary embodiments illustrate the model presented in this application whereby it is possible to design different methods and arrangements, which in obvious ways to the expert, utilize the inventive idea presented in this application.

## Claims

1. A signal processing method comprising steps of:
- demodulating an incoming signal,
- performing a Fourier transform to the demodulated incoming signal,
- generating a code word signal,
- performing a Fourier transform to the code word signal,
- calculating complex conjugate for the Fourier transformed code word signal, and
- correlating said complex conjugate of the Fourier transformed code word signal and the Fourier transformed demodulated incoming signal,
**characterized in that** said code word signal comprises at least two different code words for correlation of multiple different signals from said incoming signal.

2. The method of claim 1, **wherein** said first signal is a navigation signal or a positioning signal.

3. The method of claim 1, **wherein** said code word signal comprises at least two different code words.

4. The method of claim 1, **wherein** said code word signal comprises at most eight different code words.

5. The method of claim 1, **wherein** said at least two code words are pseudo-random sequences of a satellite navigation system.

6. A signal processing module, **characterized in that** said module is arranged to perform the method of claim 1.

7. A signal processing module, **characterized in that** said module comprises means for demodulating an incoming signal, performing a Fourier transform to the demodulated incoming signal, generating a code word signal comprising at least two different code words, performing a Fourier transform to the code word signal, calculating complex conjugate for the Fourier transformed code word signal, and correlating said complex conjugate of the Fourier transformed code word signal and the Fourier transformed demodulated incoming signal.

8. The signal processing module according to claim 7, **wherein** at least one of said means is at least partially implemented by program code on a computer readable media.

9. A device comprising the signal processing module according to any one of claims 6 - 8.

10. A positioning system comprising the device of claim 9.

11. A navigation system comprising the device of claim 9.

12. Use of the device of claim 9 as a system element in a navigation and/or positioning system.
